# EUROPÄISCHE PATENTSCHRIFT

(11) **EP 4 257 018 B1**
(45) Veröffentlichungstag und Bekanntmachung des Hinweises auf die Patenterteilung: **27.05.2026**
(21) Anmeldenummer: 23020122.0
(22) Anmeldetag: 13.03.2023
(51) Int. Cl.: A47J 43/07

(54) **SCHUTZGEHÄUSE FÜR EIN ROTIERENDES KÜCHENWERKZEUG**
PROTECTIVE CASING FOR A ROTATING KITCHEN TOOL
BOÎTIER DE PROTECTION POUR UN OUTIL DE CUISINE ROTATIF

(30) Priorität: 24.03.2022 DE 202022101560 U
(43) Veröffentlichungstag der Anmeldung: 11.10.2023
(73) Patentinhaber: Keller und Koop GmbH, 32758 Detmold (DE)
(72) Erfinder: Koop, Dennis, 32758 Detmold (DE)
(74) Vertreter: Kayser, Christoph

(56) Entgegenhaltungen:
- EP-A2- 2 225 981
- WO-A1-2021/018151
- CN-A- 112 137 455
- DE-B4- 102010 060 270
- JP-B2- 3 657 813
- US-A1- 2019 111 439
- US-B2- 9 750 372

## Beschreibung

Die vorliegende Erfindung betrifft ein Küchengerät mit einem rotierenden Küchenwerkzeug, wobei das Küchenwerkzeug einen um eine Rotationsachse drehbaren Grundkörper, von dem sich wenigstens ein Werkzeugelement radial nach außen erstreckt, wobei der Grundkörper in einem Schutzgehäuse angeordnet ist und das Schutzgehäuse eine Öffnung aufweist, durch die sich das wenigstens eine radial nach außen erstreckende Werkzeugelement nach außen erstreckt, sowie ein Schutzgehäuse zur Verwendung in einem Küchengerät mit einem rotierenden Küchenwerkzeug.

Ein solches Küchengerät ist aus dem Stand der Technik bekannt. Es gibt eine Vielzahl von elektrischen Küchengeräten mit einem rotierenden Küchenwerkzeug, von denen ausdrücklich auch im Kontext dieser Erfindung elektrische Küchenmaschinen umfasst sein sollen. Ein sehr bekanntes elektrisches Küchengerät ist z.B. eine Küchenmaschine, die unter der Marke Thermomix^{®} vertrieben wird.

Die mit solchen elektrischen Küchengeräten verwendeten Küchenwerkzeuge sind z.B. Knet- und Rührwerkzeuge. Knet-und Rührwerkzeuge kommen zum Einsatz, wenn Teig hergestellt oder verarbeitet werden soll. Die Knet- und Rührwerkzeuge haben wenigstens ein sich radial nach außen erstreckendes Werkzeugelement. In der Praxis weist ein Küchenwerkzeug eine Küchenschale auf, an deren Schalenboden das rotierende Küchenwerkzeug auf einer Welle montiert ist. Häufig weist das Küchenwerkzeug drei Werkzeugelemente auf. Die Werkzeugelemente durchpflügen im Betrieb die zu Teig werdende Masse und mischen diese zu Teig, bis dieser die richtige Konsistenz aufweist. Nach dem Ende eines solchen Arbeitsgangs, wird der Teig aus der Küchenschale entnommen. Wenn die Teigmasse im Wesentlichen entnommen worden ist, bleibt unter anderem das mit einer noch erheblichen Menge klebrigen Teigs verunreinigte Küchenwerkzeug zurück.

Der mit diesem Rückstand an Teig verbundene Nachteil ist, dass einerseits viel Teigmasse am Küchenwerkzeug verbleibt und nicht zu einem Endprodukt verarbeitet werden kann und andererseits die Reinigung des Küchenwerkzeugs aufwändiger wird und die am Küchenwerkzeug anhaftende größere Menge Teigmasse über den Abfluss entsorgt wird. Die Entsorgung von Lebensmitteln über den Abfluss ist aber auch hygienischen Gründen so gering wie möglich zu halten.

Aus WO2021/018151 ist ein Küchengerät mit einem rotierenden Küchenwerkzeug bekannt, das einen um eine Rotationsachse drehbaren Grundkörper aufweist, von dem sich wenigstens ein Werkzeugelement radial nach außen erstreckt. Der Grundkörper umfasst ein rotierendes Schneidwerkzeug mit einem einteiligen Halter, der mit einem Dichtungsring gegenüber der Antriebswelle abgedichtet ist. Dieser Halter weist eine Riegeleinrichtung zum schnellen Ein- und Ausbau des Werkzeugelements und schützt somit ausschließlich den oberen mechanischen Anschlussbereich im Grundkörper. Ein seitlicher Anschlussbereich und ein Bereich, der sich radial über die Abmessungen des Grundkörpers hinaus erstreckt, können mit diesem Konzept nicht von Teig oder anderem Material freigehalten werden.

Die Aufgabe der vorliegenden Erfindung ist daher, ein Küchengerät der eingangs genannten Gattung derart weiterzubilden, dass das Küchenwerkzeug ohne Verminderung seiner Wirkung vor einer massiven Verunreinigung geschützt ist.

Die Aufgabe wird erfindungsgemäß dadurch gelöst, dass das Schutzgehäuse zweiteilig ausgebildet ist, wobei ein unterer Teil des Schutzgehäuses antriebsseitig unter dem Küchenwerkzeug angeordnet ist und ein oberer Teil des Schutzgehäuses über dem Küchenwerkzeug angeordnet ist.

Die Aufgabe wird erfindungsgemäß auch durch ein Schutzgehäuse zur Verwendung in einem Küchengerät.

Mit der vorliegenden Erfindung ist es nunmehr möglich, den Grundkörper gegen eine Verunreinigung zu schützen. Das erfindungsgemäße Schutzgehäuse ist in der Lage, den Grundkörper und somit den Bereich um die Rotationsachse herum vor einer groben Verunreinigung durch Reste des mit dem Küchengerät bearbeitenden Lebensmittels zu schützen. So kann mit dem Schutzgehäuse verhindert werden, dass sich klebrige oder haftende Rückstände, wie zum Beispiel Teigreste, im Bereich der Rotationsachse am Grundkörper sammeln.

Ein weiterer Vorteil der vorliegenden Erfindung ist, dass das Schutzgehäuse zweiteilig ausgebildet ist. Durch die zweiteilige Ausbildung des Schutzgehäuses kann dieses in sehr einfacher Weise im Küchengerät angebracht werden.

Ein weiterer Vorteil der vorliegenden Erfindung ist, dass ein unterer Teil des Schutzgehäuses antriebsseitig unter dem Küchenwerkzeug angeordnet ist und ein oberer Teil des Schutzgehäuses über dem Küchenwerkzeug angeordnet ist. Das Anbringen des Schutzgehäuses erfolgt dann in einfacher Weise so, dass das Küchenwerkzeug vom Küchengerät gelöst wird, der untere Teil dann auf die Rotationsachse gesteckt wird und anschließend das Küchenwerkzeug wieder auf die Rotationsachse aufgesetzt wird. Abschließend wird der obere Teil auf den unteren Teil des Schutzgehäuses gesteckt, so dass der Grundkörper von dem unteren Teil und dem oberen Teil eingeschlossen ist. Durch die zweiteilige Ausbildung des Schutzgehäuse kann der Einschluss räumlich großzügiger gestaltet werden.

Zu diesem Zweck ist es auch von Vorteil, dass der untere Teil eine untere Umfangskante und der obere Teil eine obere Umfangskante aufweisen, die den Grundkörper in radialem Abstand umschließen. Dadurch wird eine umfängliche Einhausung des Grundkörpers sichergestellt.

Damit die Funktionsfähigkeit der Werkzeugelemente nicht eingeschränkt wird, ist es von Vorteil, dass die untere Umfangskante und die obere Umfangskante jeweils eine Topografie aufweisen, die im zusammengefügten Zustand der unteren Umfangskante und der oberen Umfangskante die Öffnung für das wenigstens eine, sich radial nach außen erstreckende Werkzeugelement bilden. Dadurch wird in einfacher Weise sichergestellt, dass nur der Grundkörper im Wesentlichen eingehaust ist, das wenigstens eine Werkzeugelement aber sich nach außen erstrecken kann und seine Funktion ungehindert erfüllen kann.

Ein weiterer Vorteil der vorliegenden Erfindung ist, dass jedem einzelnen Werkzeugelement eine Öffnung zugeordnet ist. Durch diese Maßnahme kann sichergestellt werden, dass die Öffnungsweite auf das jeweilige Werkzeugelement abgestimmt ist und somit das Schutzgehäuse so dicht wie möglich um den Grundkörper beziehungsweise das Küchenwerkzeug herum abschließt.

Ein weiterer Vorteil der vorliegenden Erfindung ist auch, dass der untere Teil und der obere Teil des Schutzgehäuses über eine Rastverbindung lösbar miteinander verbunden sind. Durch eine Rastverbindung können der untere Teil und der obere Teil in einfacher Weise zusammengesteckt und auch wieder voneinander getrennt werden.

Das erleichtert die Handhabung beim Anbringen des Schutzgehäuses und beim Lösen des Schutzgehäuses nach dem Gebrauch des Küchengerätes.

Auch ein Schutzgehäuse zur Verwendung in einem Küchengerät hat die gleichen Vorteile in Bezug auf seine Verwendung mit dem Küchengerät, wie diese bereits für das Küchengerät beschrieben wurden. Ein weiterer Vorteil für ein solches Schutzgehäuse ist auch, dass das Schutzgehäuse in Bezug auf eine Drehung um die Rotationsachse des Küchenwerkzeugs ausgewuchtet ist. Dadurch ist sichergestellt, dass der Grundkörper mit dem wenigstens einen Werkzeugelement auch mit dem montierten Schutzgehäuse leise und im Wesentlichen schwingungsfrei rotieren kann.

Weitere Vorteile der vorliegenden Erfindung ergeben sich aus den Merkmalen der Unteransprüche.

Eine Ausführungsform der vorliegenden Erfindung wird im Folgenden anhand der Zeichnung näher beschrieben. Es zeigen:
Fig. 1 eine schematische, perspektivische Explosionsdarstellung eines Küchenwerkzeugs mit Schutzgehäuse für ein Küchengerät gemäß vorliegender Erfindung;
Fig. 2 eine schematische Seitenansicht des Küchenwerkzeugs aus Fig. 1;
Fig. 3 eine schematische Schnittdarstellung entlang der Linie A-A in Fig. 2;
Fig. 4 eine schematische Draufsicht auf das Küchenwerkzeug mit Schutzgehäuse aus Fig. 2;
Fig. 5 schematische Seitenansicht eines unteren Teils des Schutzgehäuses gemäß vorliegender Erfindung;
Fig. 6 eine schematische Seitenansicht eines oberen Teils des Schutzgehäuses gemäß vorliegender Erfindung;
Fig. 7 schematische Draufsicht auf das untere Teil des Schutzgehäuses aus Fig. 5; und
Fig. 8 eine schematische Draufsicht auf das obere Teil des Schutzgehäuses aus Fig. 6.

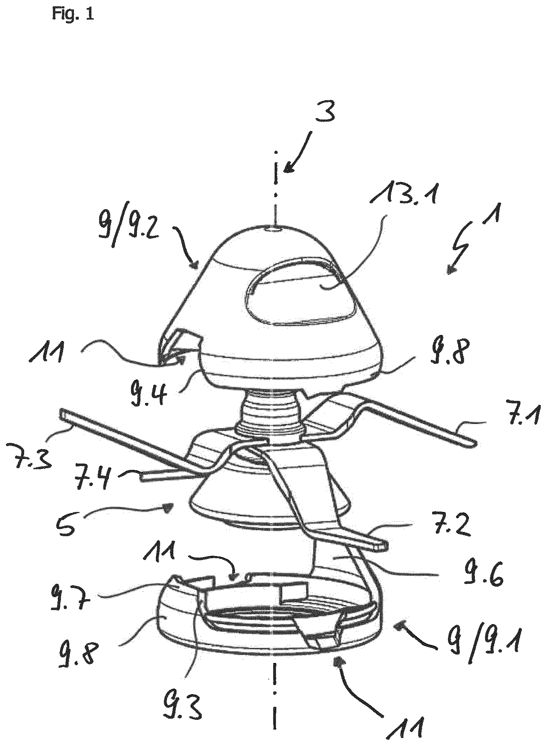

In Fig. 1 ist schematisch ein Küchenwerkzeug 1 für ein Küchengerät in Explosionsansicht dargestellt. Ein solches Küchengerät muss gemäß vorliegender Erfindung nicht zwangsweise elektrisch betrieben sein. Es kann auch mechanisch, z.B. mit Seilzug betrieben werden. Für vorliegende Erfindung ist der Antrieb nicht erfindungswesentlich. Ein solches Küchenwerkzeug 1 weist einen um eine Rotationsachse 3 drehbaren Grundkörper 5 auf, von dem sich wenigstens ein Werkzeugelement 7.1 radial nach außen erstreckt. In der Regel befindet sich das Küchenwerkzeug 1 am Boden eines Zubereitungsgefäßes (nicht dargestellt) des Küchengerätes 1. Die in das Zubereitungsgefäß gegebenen Lebensmittel werden durch das rotierende Küchenwerkzeug 1 bearbeitet. In der dargestellten Ausführungsform ist das Küchenwerkzeug 1 ein Rührwerkzeug und ist das wenigstens eine Werkzeugelement 7.1 ein Rührelement. In anderen Ausführungsformen können das Küchenwerkzeug 1 auch ein Schneidwerkzeug und das wenigstens eine Werkzeugelement 7.1 ein Schneidelement sein. Für die vorliegende Erfindung ist die Funktion des Küchenwerkzeugs nicht relevant, so dass dieses beliebige Funktionen erfüllen kann.

Bei der Bearbeitung von Lebensmitteln sammelt sich am Boden des Zubereitungsgefäßes zerkleinertes oder verrührtes Material, das auch nach Entnahme des wesentlichen Teils aus dem Zubereitungsgefäß im Bereich des Küchenwerkzeugs 1 verbleibt, so dass das Küchenwerkzeug 1 umfänglich gereinigt werden muss.

Zur Vermeidung solcher umfänglichen Verunreinigungen durch verarbeitete Lebensmittel, wie zum Beispiel Teigreste, ist das Küchenwerkzeug 1 mit einem Schutzgehäuse 9 teilweise eingehaust. In der dargestellten Ausführungsform ist das Schutzgehäuse 9 zweiteilig ausgebildet. In anderen Ausführungsformen kann das Schutzgehäuse 9 auch einteilig ausgebildet sein oder mehr als zwei Teile umfassen. Das Schutzgehäuse 9 der vorliegenden Ausführungsform umfasst einen unteren Teil 9.1 und einen oberen Teil 9.2. In anderen Ausführungsformen können die beiden Teile auch nebeneinander angeordnet sein. Der untere Teil 9.1 sitzt antriebsseitig am Boden des Zubereitungsgefäßes. Der untere Teil 9.1 ist auf der Rotationsachse 3 (einer Antriebswelle) angebracht und rotiert mit, wenn das Küchenwerkzeug 1 angetrieben wird. Der untere Teil 9.1 weist eine untere Umfangskante 9.3 auf und der obere Teil 9.2 weist eine obere Umfangskante 9.4 auf. Die untere Umfangskante 9.3 und die obere Umfangskante 9.4 umschließen den Grundkörper 5 wenigstens teilweise in radialem Abstand.

Die untere Umfangskante 9.3 und die obere Umfangskante 9.4 weisen jeweils eine Topografie auf, die im zusammengefügten Zustand der unteren Umfangskante 9.3 und der oberen Umfangskante 9.4 wenigstens eine Öffnung 11 für das wenigstens eine, sich radial nach außen erstreckende Werkzeugelement 7.1 bilden. In der in Fig. 1 dargestellten Ausführungsform sind vier Werkzeugelemente 7.1, 7.2, 7.3 und 7.4 dargestellt. In anderen Ausführungsformen können auch nur zwei Werkzeugelemente, drei Werkzeugelemente oder mehr als vier Werkzeugelemente vorgesehen sein. Jedem einzelnen Werkzeugelement 7.1, 7.2, 7.3 und 7.4 ist eine Öffnung 11 zugeordnet. Es erstreckt sich also jedes einzelne Werkzeugelement durch eine Öffnung 11, die von anderen Öffnungen 11 getrennt ist. In anderen Ausführungsformen kann auch eine Öffnung 11 mehreren Werkzeugelementen zugeordnet sein.

Die Topografien jeweils der unteren Umfangskante 9.3 und der oberen Umfangskante 9.4 sind im Wesentlichen komplementär zueinander, so dass ein Zusammenfügen des oberen Teils 9.2 und des unteren Teils 9.1 unter Bildung der wenigstens einen Öffnung 11 passgenaue Verbindung hergestellt wird.

Das Schutzgehäuse 9 ist in dem Zubereitungsgefäß lösbar angebracht. Der obere Teil 9.2 ist auf den unteren Teil 9.1 gesteckt und rastet am unteren Teil 9.1 ein. In anderen Ausführungsformen kann das Schutzgehäuse 9 auch fest in dem Zubereitungsgefäß angebracht sein. Zudem kann auch die Verbindung anders als durch Stecken und Rasten hergestellt sein. Diese Rastverbindung kann manuell gelöst werden, um den oberen Teil 9.2 zu entnehmen. Anschließend kann das Küchenwerkzeug 1 von der Antriebswelle abgenommen werden und schließlich kann der untere Teil 9.1 aus dem Zubereitungsgefäß entnommen werden.

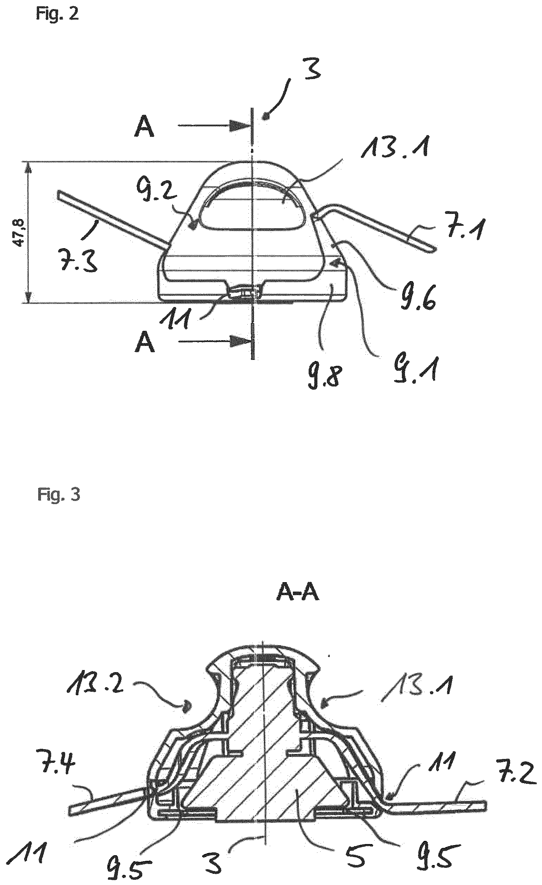

In Fig. 2 ist zu sehen, dass sich jedes Werkzeugelement 7.1, 7.2, 7.3, 7.4 durch die diesem jeweils zugeordnete Öffnung 11 radial aus dem Schutzgehäuse 9 nach außen erstreckt. Dadurch liegen die Werkzeugelement 7.1, 7.2, 7.3, 7.4 frei und bleiben funktionsfähig, auch wenn das Schutzgehäuse 9 den Grundkörper 5 vollständig umschließt.

In Fig. 3 ist schematisch ein Schnitt entlang der Linie A-A in Fig. 2 dargestellt. Der Grundkörper 5 sitzt zentrisch auf der Rotationsachse 3 und wird über die Antriebswelle zur Drehung um die Rotationsachse 3 angetrieben. Das untere Teil 9.1 untergreift den Grundkörper 5 bodenseitig und ist mit einem Metallring 9.5, zum Beispiel einem Edelstahlring, versehen, der in der dargestellten Ausführungsform von Kunststoff umspritzt ist. In anderen Ausführungsformen kann anstelle des Metallrings 9.5 auch ein Ring oder eine Scheibe aus Gummi oder anderem Material vorgesehen sein. Die Öffnungen 11 liegen im Übergangsbereich des unteren Teils 9.1 und des oberen Teils 9.2 vor. Das Schutzgehäuse 9 ist insgesamt kegelförmig ausgebildet. Im oberen Teil 9.1 ist am Umfang an zwei gegenüberliegenden Stellen jeweils eine Griffmulde 13.1, 13.2 ausgebildet, in die ein Benutzer mit Daumen und Zeigefinger eingreifen kann, um das obere Teil 9.2 entweder auf das untere Teil 9.1 zu stecken oder von dem unteren Teil 9.1 zu lösen.

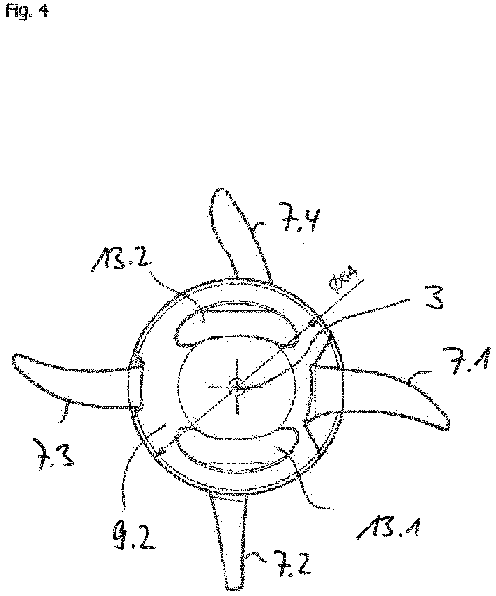

In Fig. 4 ist schematisch eine Draufsicht auf das Küchenwerkzeug 1 mit Schutzgehäuse 9 aus Fig. 2 dargestellt. Der größte Durchmesser des Schutzgehäuses 9 beträgt in der vorliegenden Ausführungsform 64 mm. In anderen Ausführungsformen können andere Durchmesser gewählt werden.

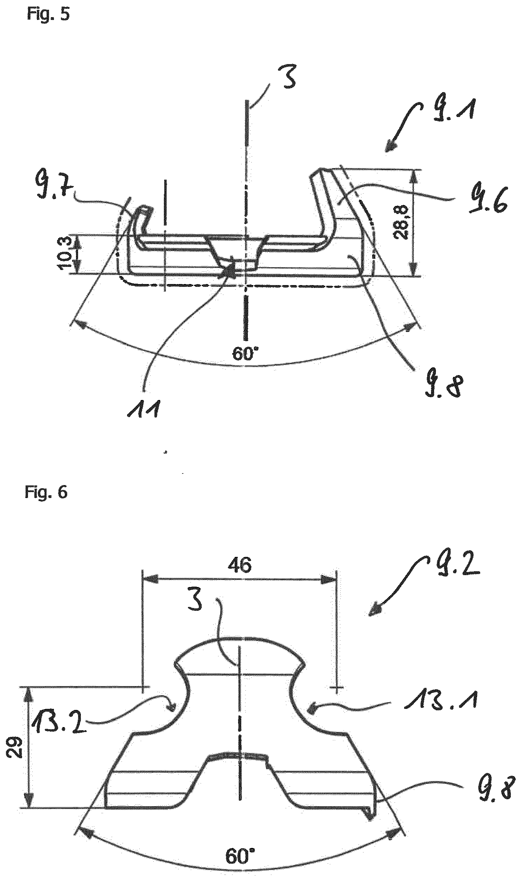

In Fig. 5 ist schematisch eine Ansicht des unteren Teils 9.1 des Schutzgehäuses 9 dargestellt. Der untere Teil 9.1 weist an einem ersten Umfangsabschnitt ein in Richtung Kegelspitze in etwa trapezförmiges erstes Mantelflächenstücks 9.6 auf. Die Höhe des Mantelflächenstücks 9.6 beträgt in der vorliegenden Ausführungsform 28,8 mm. An einem dem ersten Umfangsabschnitt gegenüberliegenden zweiten Umfangsabschnitt des unteren Teils 9.1 ist ein in Richtung Kegelspitze in etwa trapezförmiges zweites Mantelflächenstück 9.7 ausgebildet, das in der vorliegenden Ausführungsform eine geringere Höhe als das erste Mantelflächenstück 9.6 hat. Der untere Teil 9.1 bildet einen Sockel 9.8 mit einer Höhe von ca. 10,3 mm, von dem aus sich wenigstens das erste Mantelflächenstück 9.6 und das zweite Mantelflächenstück 9.7 als Teil eines Kegelmantels erstrecken. Der obere Teil 9.2 weist die den Kegelmantel vervollständigenden, ergänzenden Mantelflächenstücke auf. Ein durch den unteren Teil 9.1 und den oberen Teil 9.2 gebildeter "Drehkegel" weist die für diesen typischen Winkel auf, das heißt, im Querschnitt durch die Mittelachse drei Winkel von je 60°, bzw. zu beiden Seiten der Mittelachse jeweils ein rechtwinkliges Dreieck. Unterhalb des Drehkegels erstreckt sich der Sockel 9.8.

In Fig. 6 ist schematisch eine Seitenansicht des oberen Teils 9.2 des Schutzgehäuses 9 dargestellt. Auch dieses umfasst an einigen Stellen den Sockel 9.8 und von dem Sockel 9.8 ausgehend die den Drehkegel ergänzenden Mantelflächenstücke bzw. den zu den Mantelflächenstücken 9.6 und 9.7 komplementären Mantelflächenstücke zur Bildung der mit Ausnahme der wenigstens einen Öffnung 11 vollständigen Mantelfläche des Drehkegels.

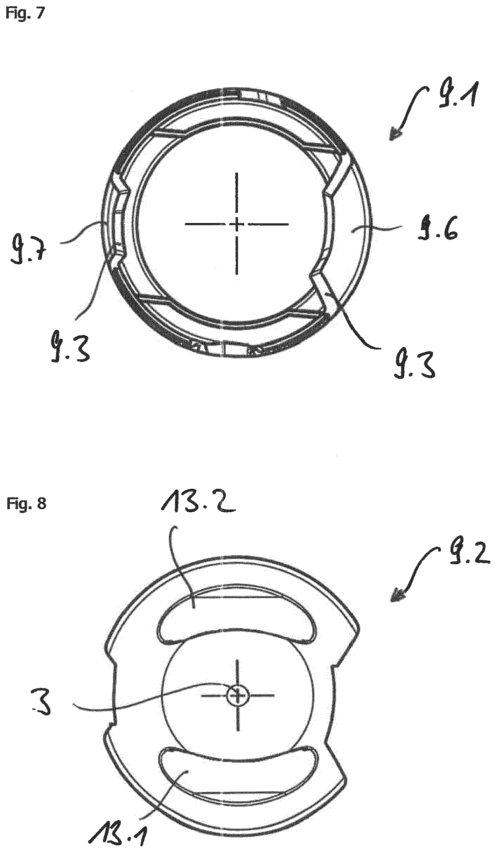

In Fig. 7 ist der untere Teil 9.1 in Draufsicht dargestellt. Das erste Mantelflächenstück 9.6 und das gegenüberliegende zweite Mantelflächenstück 9.7 kommen dem Betrachter entgegen.

In Fig. 8 ist eine Draufsicht des oberen Teils 9.2 schematisch dargestellt. In der in Fig. 8 dargestellten Ausrichtung des oberen Teils 9.2 wird dieses auf das in Fig. 7 dargestellte untere Teil 9.1 aufgesteckt und durch eine Rastverbindung mit diesem verbunden.

Durch einen Griff in die Griffmulden 13.1, 13.2 des oberen Teils 9.2 lässt sich die Rastverbindung wieder lösen.

Das Schutzgehäuse 9 ist für eine Rotation ausgelegt, d.h., es weist eine Masseverteilung auf, die als ausgewuchtet bezeichnet werden kann, so dass beim Rotieren keine Unruhe entsteht. Das Schutzgehäuse 9 kann aus einem beliebigen Material hergestellt sein, zum Beispiel aus Metall, Kunststoff, Glas, Holz, Gummi, Kohlefaser, oder einer Kombination aus Metall und Kunststoff.

### Bezugszeichenliste

- 1: Küchenwerkzeug
- 3: Rotationsachse
- 5: Grundkörper
- 7.1: erstes Werkzeugelement
- 7.2: zweites Werkzeugelement
- 7.3: drittes Werkzeugelement
- 7.4: viertes Werkzeugelement
- 9: Schutzgehäuse
- 9.1: unterer Teil
- 9.2: oberer Teil
- 9.3: untere Umfangskante
- 9.4: obere Umfangskante
- 9.5: Metallring
- 9.6: erstes Mantelflächenstück
- 9.7: zweites Mantelflächenstück
- 9.8: Sockel
- 11: Öffnung
- 13.1: erste Griffmulde
- 13.2: zweite Griffmulde

## Patentansprüche

1. Küchengerät mit einem rotierenden Küchenwerkzeug (1) und einem Schutzgehäuse (9),
wobei das Küchenwerkzeug (1) einen um eine Rotationsachse (3) drehbaren Grundkörper (5) aufweist, von dem sich wenigstens ein Werkzeugelement (7.1; 7.2; 7.3; 7.4) radial nach außen erstreckt,
wobei der Grundkörper (5) in dem Schutzgehäuse (9) angeordnet ist und das Schutzgehäuse (9) eine Öffnung (11) aufweist, durch die sich das wenigstens eine radial nach außen erstreckende Werkzeugelement (7.1; 7.2; 7.3; 7.4) nach außen erstreckt,
wobei das Schutzgehäuse (9) zweiteilig ausgebildet ist, und
wobei ein unterer Teil (9.1) des Schutzgehäuses (9) antriebsseitig unter dem Küchenwerkzeug (1) angeordnet ist und ein oberer Teil (9.2) des Schutzgehäuses (9) über dem Küchenwerkzeug (1) angeordnet ist.

2. Küchengerät nach Anspruch 1,
**dadurch gekennzeichnet,**
**dass** der untere Teil (9.1) eine untere Umfangskante (9.3) und der obere Teil (9.2) eine obere Umfangskante (9.2) aufweisen, die den Grundkörper (5) in radialem Abstand wenigstens teilweise umschließen.

3. Küchengerät nach Anspruch 2,
**dadurch gekennzeichnet,**
**dass** die untere Umfangskante (9.3) und die obere Umfangskante (9.4) jeweils eine Topografie aufweisen, die im zusammengefügten Zustand der unteren Umfangskante (9.3) und der oberen Umfangskante (9.4) die Öffnung (11) für das wenigstens eine, sich radial nach außen erstreckende Werkzeugelement (7.1; 7.2; 7.3; 7.4) bilden.

4. Küchengerät nach Anspruch 3,
**dadurch gekennzeichnet,**
**dass** jedem einzelnen Werkzeugelement (7.1; 7.2; 7.3; 7.4) eine einzige Öffnung (11) zugeordnet ist.

5. Küchengerät nach einem der Ansprüche 1 bis 4,
**dadurch gekennzeichnet,**
**dass** der untere Teil (9.1) und der obere Teil (9.2) des Schutzgehäuses (9) über eine Rastverbindung lösbar miteinander verbunden sind.

6. Küchengerät nach einem der vorstehenden Ansprüche, **dadurch gekennzeichnet,**
**dass** das Schutzgehäuse (9) in dem Zubereitungsgefäß lösbar angebracht ist.

7. Küchengerät nach einem der vorstehenden Ansprüche, **dadurch gekennzeichnet,**
**dass** das Schutzgehäuse (9) kegelförmig ausgebildet ist.

8. Küchengerät nach einem der vorstehenden Ansprüche, **dadurch gekennzeichnet,**
**dass** das Schutzgehäuse (9) in Bezug auf eine Drehung um die Rotationsachse des Küchenwerkzeugs ausgewuchtet ist.

9. Küchengerät nach einem der vorstehenden Ansprüche, **dadurch gekennzeichnet,**
**dass** das Schutzgehäuse aus einem Material hergestellt, ausgewählt aus Metall, Kunststoff oder einer Kombination aus Metall und Kunststoff.

10. Schutzgehäuse zur Verwendung in einem Küchengerät nach einem der Ansprüche 1 bis 9.

## Claims

1. A kitchen appliance with a rotating kitchen tool (1) and a protective housing (9),
wherein the kitchen tool (1) has a base body (5), which is rotatable about a rotational axis (3) and from which at least one tool element (7.1; 7.2; 7.3; 7.4) extends radially outward,
wherein the base body (5) is arranged in the protective housing (9) and the protective housing (9) has an opening (11), through which the at least one tool element (7.1; 7.2; 7.3; 7.4) extends radially outward,
wherein the protective housing (9) has a two-part design, and
wherein a lower part (9.1) of the protective housing (9) is arranged underneath the kitchen tool (1) on the drive side and an upper part (9.2) of the protective housing (9) is arranged above the kitchen tool (1).

2. The kitchen appliance according to claim 1,
**characterized in**
**that** the lower part (9.1) has a lower peripheral edge (9.3) and the upper part (9.2) has an upper peripheral edge (9.2), wherein said peripheral edges at least partially enclose the base body (5) at a radial distance.

3. The kitchen appliance according to claim 2,
**characterized in**
**that** the lower peripheral edge (9.3) and the upper peripheral edge (9.4) respectively have topographies that form the opening (11) for the at least one tool element (7.1; 7.2; 7.3; 7.4) extending radially outward in the assembled state of the lower peripheral edge (9.3) and the upper peripheral edge (9.4).

4. The kitchen appliance according to claim 3,
**characterized in**
**that** a single opening (11) is assigned to each individual tool element (7.1; 7.2; 7.3; 7.4).

5. The kitchen appliance according to one of claims 1 to 4,
**characterized in**
**that** the lower part (9.1) and the upper part (9.2) of the protective housing (9) are separably connected to one another by means of a snap-in connection.

6. The kitchen appliance according to one of the preceding claims,
**characterized in**
**that** the protective housing (9) is separably fixed in the preparation vessel.

7. The kitchen appliance according to one of the preceding claims,
**characterized in**
**that** the protective housing (9) has a conical design.

8. The kitchen appliance according to one of the preceding claims,
**characterized in**
**that** the protective housing (9) is balanced with respect to a rotation about the rotational axis of the kitchen tool.

9. The kitchen appliance according to one of the preceding claims,
**characterized in**
**that** the protective housing is made of a material selected from metal, plastic or a combination of metal and plastic.

10. A protective housing for use in a kitchen appliance according to one of claims 1 to 9.

## Revendications

1. Appareil culinaire, doté d'un ustensile de cuisine rotatif et d'un carter de protection (9),
l'ustensile de cuisine (1) comportant un corps de base (5) susceptible de tourner autour d'un axe de rotation (3), à partir duquel au moins un élément d'ustensile (7.1 ; 7.2 ; 7.3 ; 7.4) s'étend vers l'extérieur en direction radiale,
le corps de base (5) étant placé dans le carter de protection (9) et le carter de protection (9) comportant un orifice (11), à travers lequel l'au moins un élément d'ustensile (7.1 ; 7.2 ; 7.3 ; 7.4) s'étendant vers l'extérieur en direction radiale s'étend vers l'extérieur en direction radiale,
le carter de protection (9) étant conçu en deux parties et
une partie (9.1) inférieure du carter de protection (9) étant placée côté entraînement sous l'ustensile de cuisine (1) et une partie (9.2) supérieure du carter de protection (9) étant placée au-dessus de l'ustensile de cuisine (1).

2. Appareil culinaire selon la revendication 1,
**caractérisé**
**en ce que** la partie (9.1) inférieure comporte une arête périphérique (9.3) inférieure et la partie (9.2) supérieure comporte une arête périphérique (9.2) supérieure, lesquelles entourent au moins partiellement le corps de base (5) avec un écart radial.

3. Appareil culinaire selon la revendication 2,
**caractérisé**
**en ce que** l'arête périphérique (9.3) inférieure et l'arête périphérique (9.4) supérieure présentent chacune une topographie, qui lorsque l'arête périphérique (9.3) inférieure et l'arête périphérique (9.4) supérieure sont assemblées, constituent l'orifice (11) pour l'au moins un élément d'ustensile (7.1 ; 7.2 ; 7.3 ; 7.4) s'étendant vers l'extérieur dans la direction radiale.

4. Appareil culinaire selon la revendication 3,
caractérisé
à ce qu'à chaque élément d'ustensile (7.1 ; 7.2 ; 7.3 ; 7.4) individuel est affecté un unique orifice (11).

5. Appareil culinaire selon l'une quelconque des revendications 1 à 4,
**caractérisé**
**en ce que** la partie (9.1) inférieure et la partie (9.2) supérieure du carter de protection (9) sont reliées l'une avec l'autre de manière amovible par l'intermédiaire d'une liaison par enclenchement.

6. Appareil culinaire selon l'une quelconque des revendications précédentes,
**caractérisé**
**en ce que** le carter de protection (9) est placé de manière amovible dans la cuve de préparation.

7. Appareil culinaire selon l'une quelconque des revendications précédentes,
**caractérisé**
**en ce que** le carter de protection (9) est conçu de forme conique.

8. Appareil culinaire selon l'une quelconque des revendications précédentes,
**caractérisé**
**en ce que** le carter de protection (9) est équilibré en rapport à une rotation autour de l'axe de rotation de l'ustensile de cuisine.

9. Appareil culinaire selon l'une quelconque des revendications précédentes,
**caractérisé**
**en ce que** le carter de protection est fabriqué en une matière sélectionnée parmi un métal, une matière plastique ou une association de métal et de matière plastique.

10. Carter de protection, destiné à une utilisation dans un appareil culinaire selon l'une quelconque des revendications 1 à 9.
